**Europäisches Patentamt**

**European Patent Office**

**Office européen des brevets**

(19)

(11) Veröffentlichungsnummer : **0 343 516 B1**

(12) **EUROPÄISCHE PATENTSCHRIFT**

(45) Veröffentlichungstag der Patentschrift :
**05.08.92 Patentblatt 92/32**

(21) Anmeldenummer : **89108971.6**

(22) Anmeldetag : **18.05.89**

(51) Int. Cl.⁵ : **B60P 3/08**

(54) **Fahrzeug mit Ladefläche.**

(30) Priorität : **25.05.88 DE 8806829 U**

(43) Veröffentlichungstag der Anmeldung :
**29.11.89 Patentblatt 89/48**

(45) Bekanntmachung des Hinweises auf die
Patenterteilung :
**05.08.92 Patentblatt 92/32**

(84) Benannte Vertragsstaaten :
**AT BE CH DE ES FR GB IT LI NL SE**

(56) Entgegenhaltungen :
**DE-B- 1 290 826**
**DE-U- 7 821 681**
**DE-U- 8 806 829**
**FR-A- 1 297 191**
**FR-A- 1 337 454**
**US-A- 2 918 326**

(73) Patentinhaber : **Kässbohrer-Austria**
**Fahrzeugwerke GmbH**
**Peter-Pfenningerstrasse 26**
**A-5020 Salzburg (AT)**

(72) Erfinder : **Kraihamer, Mathias**
**Schaming 69**
**A-5301 Eugendorf (AT)**

(74) Vertreter : **Patentanwälte Grünecker,**
**Kinkeldey, Stockmair & Partner**
**Maximilianstrasse 58**
**W-8000 München 22 (DE)**

Jouve, 18, rue Saint-Denis, 75001 PARIS

## Beschreibung

Die vorliegende Erfindung betrifft ein Fahrzeug mit wenigstens einer durch einen Hubarm höhenverstellbaren Ladefläche, wobei ein Ende des Hubarms mit der Ladefläche in Verbindung steht und das andere Ende sich mittels einer Laufrolle in einer Führung verschiebbar abstützt, und mit einer Verriegelung zum Verriegeln des verschiebbaren Endes des Hubarms, die eine durch eine Kolben-Zylinder-Einheit von einer Arretier- in eine Lösestellung und zurück bewegbare Raste und eine an der Führung befestigte Aufnahme umfaßt, in die die Raste in der Arretierstellung eingreift.

Aus der Praxis ist ein derartiges Fahrzeug für den Transport von Kraftfahrzeugen bekannt, bei dem die Verriegelung eine Zahnstange als Aufnahme für die Raste umfaßt. Die Zahnstange befindet sich außen an der als Profilträger mit teilgeschlossenem Profil ausgebildeten Führung für das verschiebbare Ende des Hubarms. Die Raste ist als zweiarmiger Hebel ausgebildet, der außerhalb der Führung am Hubarm verschwenkbar gelagert ist. Ein Hebelarm des zweiarmigen Hebels greift in der Arretierstellung mit seinem freien Ende in die Zahnstange ein. Der andere Hebelarm ist mit der ebenfalls außerhalb der Führung angeordneten Kolben-Zylinder-Einheit verbunden, die die Raste ständig in Eingriff mit der Zahnstange und damit in der Arretierstellung hält. Zum Absenken des Hubarms und damit der Ladefläche wird der in die Zahnstange eingreifende Hebelarm des zweiarmigen Hebels durch Betätigung der Kolben-Zylinder-Einheit und damit Verschwenkung des zweiarmigen Hebels außer Eingriff mit der Zahnstange gebracht.

Nachteilig bei diesem bekannten Fahrzeug ist die Ausbildung der Aufnahme für die Raste als Zahnstange und deren Anordnung außerhalb der Führung. Die Zahnstange ist ein konstruktiv und damit kostenmäßig recht aufwendiges Bauteil, das außerdem als zusätzliches Bauteil die Baubreite im Bereich der Führung vergrößert. Da die Kolben-Zylinder-Einheit und der an diese angeschlossene zweiarmige Hebel sowie dessen Lagerung außerhalb der Führung angeordnet sind, sind diese Bauteile äußeren Einflüssen, wie z.B. Schmutz oder Steinschlag ausgesetzt, und dadurch störanfällig.

Es ist Aufgabe der Erfindung, ein Fahrzeug der eingangs genannten Art mit einer konstruktiv einfacheren, betriebssichereren und kompakter bauenden Verriegelung zu schaffen.

Dies wird erfindungsgemäß dadurch erreicht, daß die Raste als Arretierbolzen und die Aufnahem als Lochreihe ausgebildet sind, daß die Lochreihe in der Führung selbst ausgebildet ist, und daß der Arretierbolzen sich im Inneren der Laufrolle befindet.

Mit der Verwendung einer Lochreihe anstelle einer Zahnstange wird der konstruktive Aufwand der Verriegelung beträchtlich reduziert. Durch die Ausbildung der Lochreihe in der Führung selbst, beispielsweise in einer Wandung derselben, entfällt ein die Baubreite der Verriegelung vergrößendes zusätzliches Bauteil analog zur Zahnstange. Der Arretierbolzen ist infolge seiner Anordnung innerhalb der Laufrolle und damit innerhalb der Führung vor äußeren Einflüssen geschützt, so daß er eine im Vergleich zum zweiarmigen Hebel der Verriegelung des bekannten Fahrzeuges erheblich höhere Betriebssicherheit aufweist.

Der Arretierbolzen kann zum Lösen der Verriegelung in Richtung der Lösestellung fluidbeaufschlagbar sein.

Vorzugsweise ist der Arretierbolzen in seiner Längsrichtung verschiebbar. Mit dieser Längsverschiebbarkeit wird eine höhere Betriebssicherheit und eine einfacherere Konstrukion im Vergleich zum verschwenkbaren zweiarmigen Hebel der bekannten Verriegelung erreicht.

Zur Erzielung einer kompakten Bauweise ist es günstig, das der Lochreihe abgewandte Ende des Arretierbolzens als Kolben der Kolben-Zylinder-Einheit auszubilden. Zum gleichen Zweck kann der den Kolben aufnehmende Zylinderraum im Hubarm ausgebildet sein. Die auf diese Weise im Hubarm angeordnete Kolben-Zylinder-Einheit ist somit vor äußeren Einflüssen geschützt, wodurch die Betriebssicherheit erhöht wird.

Ebenfalls zur Erzielung einer kompakten Bauweise kann die den Arretierbolzen in Richtung der Arretierstellung kraftbeaufschlagende Feder als Druckfeder im Zylinderraum angeordnet sein.

Zum gleichen Zweck ist es günstig, wenn der Arretierbolzen eine Nabe für die Laufrolle durchsetzt. Diese Nabe kann seitlich vom Hubarm abstehend, im wesentlichen normal zu dessen Ebene verlaufend, angeordnet sein.

Vorzugsweise ist der Arretierbolzen an seinem der Lochreihe abgewandten Ende durch einen Stift verlängert, der den Zylinderraum und eine Bohrung in den diesen abschließenden Zylinderdeckel durchsetzt.

Gemäß einer Weiterbildung ist der Stift mit seinem freien Ende bei arretiertem Arretierbolzen innerhalb und bei gelöstem Arretierbolzen außerhalb der Bohrung im Zylinderdeckel angeordnet. Auf diese Weise kann der Fahrer mit einem Blick überprüfen, ob der Arretierbolzen tatsächlich verriegelt ist. Diese Überprüfung ist dann besonders einfach, wenn der Zylinderdeckel auf der fahrzeugäußeren Seite des Hubarms angebracht und somit vom Fahrer leicht einsehbar ist.

Gemäß einer Weiterbildung der Erfindung ist der Stift als Schraubenbolzen ausgebildet und mit seinem

EP 0 343 516 B1

freinen Bolzenende mittels Schraubangriff am Arretierbolzen befestigt, wobei die Bohrung im Zylinderdeckel eine Bohrungserweiterung zur Aufnahme des Schraubenkopfes des Schraubenbolzens aufweist. Damit ist es möglich, im Notfall auch eine manuelle Lösung der Verriegelung vorzunehmen. Dies stellt eine weitere Maßnahme zur Erhöhung der Betriebssicherheit dar.

Vorzugsweise ist der Kolben als ein zum Zylinderdeckel hin offener Kolben ausgebildet. Dabei wird auf einfache Weise eine Hubbegrenzung des Arretierbolzens erzielt und durch die Möglichkeit der Aufnahme der Feder im Kolben zur kompakten Bauweise beigetragen.

Gemäß einer Weiterbildung der Erfindung grenzt eine an der Wandung des Zylinderraums befestigte Membrane eine an einen Pneumatikanschluß angeschlossenen Arbeitsraum des Zylinderraums ab. Hierbei ist es vorteilhaft, eine Scheibe zwischen Kolben und Arretierbolzen sowie einen Ringspalt zwischen Kolbenmantel und Wandung des Zylinderraums vorzusehen, wobei die Breite des Ringspaltes die Dicke der Membrane übersteigt. Dabei kann die Membrane mittels der Scheibe am Kolben befestigt sein.

Vorteilhafterweise weist der Arretierbolzen eine Längsnut auf, in die als Verdrehsicherung eine an der Nabe verankerte federbelastete Kugel eingreift.

Der Hubarm kann ohne Lösen der Verriegelung angehoben werden, wenn das der Lochreihe zugewandte Ende des Arretierbolzens eine Abschrägung aufweist, die an dem in

Bewegungsrichtung des verschiebbaren Endes des Hubarms beim Anheben desselben vorlaufenden Bereich des Arretierbolzens angeordnet ist.

Die Führung kann am Fahrzeugrahmen oder an einer Ladefläche angeordnet sein. Im letzteren Fall ist die Führung vorteilhafterweise an einer unteren Ladefläche und die Gelenkverbindung des Hubarms an einer oberen Ladefläche befestigt. Vorzugsweise ist die Führung als Träger für die Ladefläche ausgebildet.

Gemäß einer Weiterbildung der Erfindung ist die Führung als ein mit seiner Öffnung dem Hubarm zugewandter C-Träger ausgebidlet, der in seinem Steg die Lochreihe aufweist.

Nachstehend ist die Erfindung anhand eines Ausführungsbeispiels unter Bezugnahme auf die Zeichnung näher beschrieben. Es zeigen:

Fig. 1 eine Seitenansicht eines erfindungswesentlichen Teils eines PkW-Transporters als Ausführungsbeispiel des erfindungsgemäßen Fahrzeuges, in schematischer Darstellung,

Fig.2 eine Schnittdarstellung der Führung und des darin geführten unteren Teils des Hubarms nach Fig. 1, und

Fig.3 eine Seitenansicht des in Fig. 2 dargestellten unteren Endes des Hubarms mit der Führung bei Betrachtung der Fig. 2 von links.

Da in der Zeichnung ein Teil des erfindungsgemäßen Fahrzeugs in Seitenansicht dargestellt ist, beschränkt sich die nachfolgende Beschreibung auch auf diesen Teil und damit auf nur einen Hubarm und eine Führung für denselben. Bei einem PkW-Transporter ist die höhenverstellbare Ladefläche an beiden Fahrzeugseiten durch wenigstens je einen Hubarm höhenverstellbar in je einer Führung gehalten. Die höhenverstellbare Ladefläche kann als eine für das Beladen und Entladen des Fahrzeuges vorgesehene Rampe ausgebildet sein, die an einer stationären Ladefläche höhenverschwenkbar angelenkt ist.

Das erfindungsgemäße Fahrzeug gemäß der Zeichnung umfaßt eine untere Ladefläche 1 und eine darüber angeordnete höhenverstellbare obere Ladefläche 2, einen heb- und senkbaren Hubarm 3 zur Höhenverstellung der oberen Ladefläche 2 und eine Verriegelung mit einem Arretierbolzen 4 und einer Lochreihe 5 zum Verriegeln des Hubarms 3 und damit der oberen Ladefläche 2 in der jeweils gewünschten Höhenstellung. Der Hubarm 3 ist mit seinem oberen Ende mittels einer Verbindung 6 mit der oberen Ladefläche 2 verbunden und mit seinem unteren Ende in einer als Profilträger mit C-Profil ausgebildeten Führung 7 mittels einer Laufrolle 8 verschiebbar geführt.

Der Hubarm 3 ist sowohl in seiner angehobenen als auch in seiner abgesenkten Stellung und in sämtlichen Zwischenstellungen schräg zur unteren Ladefläche 1 angeordnet, selbstverständlich unter Einschluß unterschiedlicher, den jeweiligen Höhenstellungen entsprechender Winkel. Zur Betätigung des Hubarms ist eine Kolben-Zylinder-Einheit 9 vorgesehen.

Die untere Ladefläche 1 ist am Profilträger 7 abgestützt (selbstverständlich sind an jeder Fahrzeugseite wenigstens ein Hubarm und ein Profilträger vorgesehen). Der Profilträger 7 ist an einem Fahrzeugrahmen 10 befestigt, der sich an den Fahrzeugrädern 11, von denen lediglich eines gezeigt ist, abstützt.

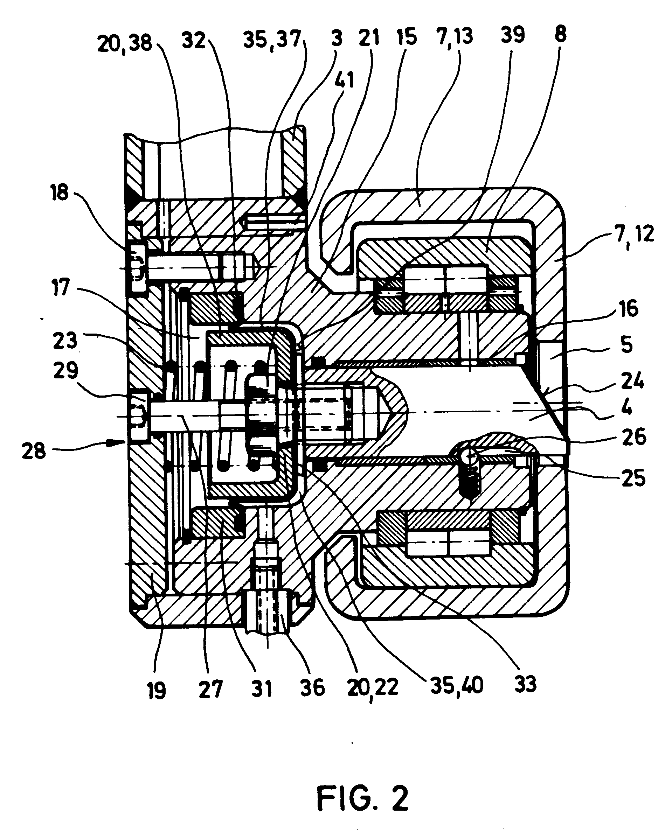

Der Profilträger 7 mit C-Profil ist auf der fahrzeuginneren Seite des Hubarms 3 parallel zu dessen unterem Ende angeordnet und weist in seinem parallel zum Hubarm verlaufenden Steg 12 die Lochreihe 5 auf, von der lediglich ein einziges Loch - in Fig. 2 - gezeigt ist. Die sich an den Steg 12 anschließenden Flansche 13 des Profilträger 10 sind an ihren freien Enden nach einwärts abgewinkelt und begrenzen auf diese Weise einen Schlitz 14, durch den eine am unteren Ende des Hubarms 3 mittels Fixierstiften 41 befestigte Nabe 15 in das Innere des Profilträgers 7 hineinragt. Die Laufrolle 8 ist auf dieser Nabe 15 drehbar gelagert und im wesentlich allseitig vom Profilträger 7, d.h. von dessen Steg 12, dessen Flanschen 13 sowie deren abgewinkelten freien

3

Ende in axialer und radialer Richtung geführt.

Das Innere der Nabe 15 ist mit einer koaxialen Durchgangsbohrung versehen, die mit einer Laufbuchse 16 ausgekleidet ist und in einen offenen Zylinderraum 17 größeren Durchmessers mündet. Ein mittels Schrauben 18 an der Nabe 15 lösbar befestigter und bündig mit der Außenseite des Hubarms 3 verlaufender Zylinderdeckel 19 schließt den offenen Zylinderraum 17 an dem der Durchgangsbohrung gegenüberliegenden Ende ab.

Der Arretierbolzen 4 ist innerhalb der Durchgangsbohrung bzw. der Laufbuchse 16 verschiebbar angeordnet und weist eine Länge auf, die zumindest der Länge der Durchgangsbohrung plus der Dicke des Stegs 12 des Profilträgers 7 entspricht. Im Zylinderraum 17 befindet sich ein zum Zylinderdeckel 19 hin offener, d.h. becherförmig ausgebildeter Kolben 20, der mittels einer Spannschraube 21 an das der Lochreihe 5 abgewandte Ende des Arretierbolzens 4 angeschraubt ist. Der Zylinderraum 17 und der Kolben 20 mit dem Arretierbolzen 4 als Kolbenstange stellen eine im Inneren des Hubarms 3 angeordnete Kolben-Zylinder-Einheit dar.

Eine im Zylinderraum 17 angeordnete, sich am Zylinderdeckel 19 und am Kolbenboden 22 des Kolbens 20 abstützende Druckfeder 23 beaufschlagt den Arretierbolzen 4 ständig in Richtung zur Lochreihe 5, d.h. in seine Arretierstellung, in welcher er in jeweils eines der Löcher der Lochreihe im wesentlichen formschlüssig eingreift und auf diese Weise den Hubarm 3 und damit die Ladefläche 2 am Profilträger 7 verriegelt. Das in die Lochreihe 5 eingreifende Ende des Arretierbolzens 4 ist mit einer Abschrägung 24 versehen, die der Bewegungsrichtung der Laufrolle 8 beim Anheben des Hubarms 3 zugewandt ist. Der besseren Darstellung wegen ist diese Abschrägung 24 in Fig. 2 um 90° gedreht dargestellt. Der Arretierbolzen 4 weist eine Längsnut 25 auf, in die als Verdrehsicherung eine an der Nabe 15 verankerte federbelastete Kugel 25 eingreift.

Der Arretierbolzen 4 ist durch einen Schraubenbolzen 27 verlängert, der in die ein entsprechendes Gewinde aufweisende Spannschraube 21 eingeschraubt ist und den Zylinderraum 17 im Inneren der Druckfeder 23 sowie eine Bohrung im Zylinderdeckel 19 durchsetzt. Die Bohrung endet im fahrzeugäußeren Teil des Zylinderdeckels 19 mit einer Bohrungserweiterung 28 zur Aufnahme des Schraubenkopfes 29 des Schraubenbolzens 27. Der Schraubenkopf 29 sitzt in der in Fig. 2 gezeigten Arretierstellung des Arretierbolzens 4 innerhalb der Bohrungserweiterung 28, ragt jedoch bei gelöster Verriegelung aus der Bohrungserweiterung 28 heraus.

Der Zylinderraum 17 weist zwei Bereiche auf, einen dem Arretierbolzen zugewandten Bereich kleineren Durchmessers und einen dem Zylinderdeckel 19 zugewandten Bereich größeren Durchmessers. Beide Bereiche sind über eine Stufe 30 miteinander verbunden. Der Bereich größeren Durchmessers ist von einem Spannring 31 ausgefüllt, dessen Dicke der Breite der Stufe 30 entspricht. Der Spannring 31 dient im Zusammenwirken mit der Stufe 30 zum Festklemmen des Fußteils einer Membran 32, die mittels einer zwischen Kolbenboden 22 und Arretierbolzen 4 befindlichen Scheibe 31 am Kolbenboden 22 festgeklemmt ist und einen Arbeitsraum 33 abgrenzt, an den ein Pneumatikanschluß 36 angelegt ist. Der Arbeitsraum 35 wird gebildet durch einen Ringspalt 37 zwischen dem Kolbenmantel 38 mit darüberliegender Membran 32 und der Wandung des Zylinderraums 17 sowie durch einen Ringspalt 40 zwischen dem Zylinderraumboden 39 und dem Kolbenboden 22 mit darüberliegender Membran 32. In der in Fig. 2 gezeigten Arretierstellung des Arretierbolzens 4 weist der Ringspalt 40 und damit der Arbeitsraum 35 sein kleinstes Volumen auf.

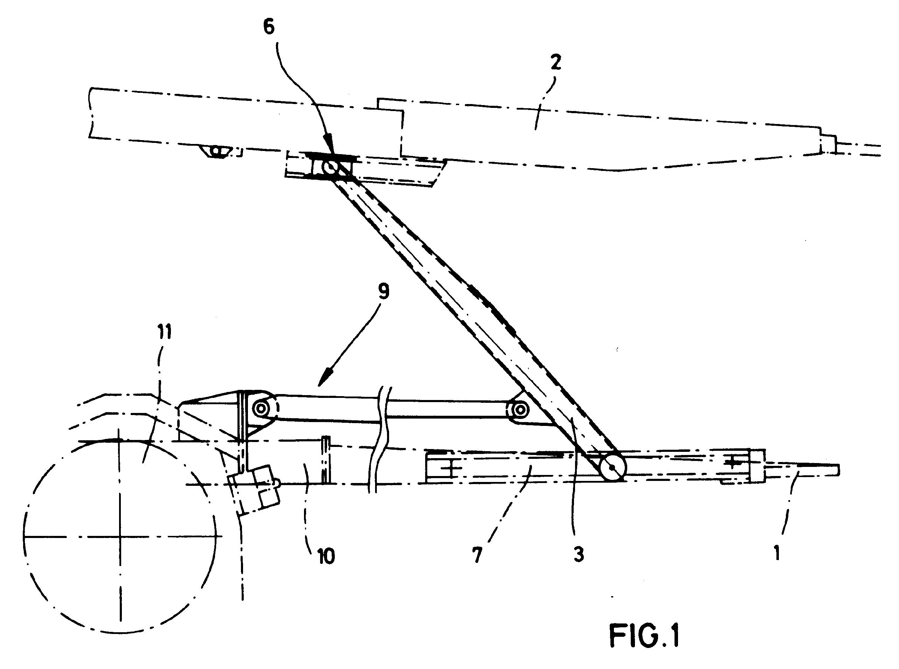

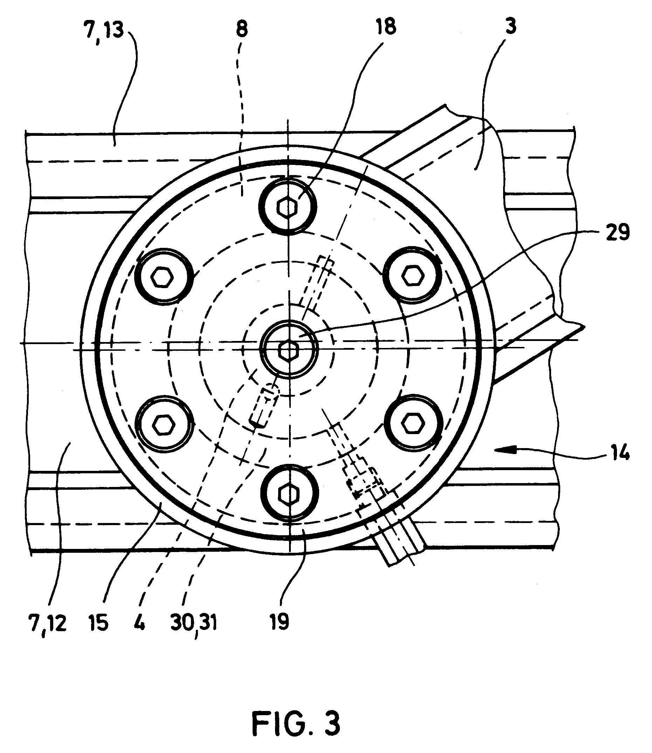

Um die Ladefläche 2, ausgehend von der in Fig. 1 gezeigten mittleren Hubstellung in eine höhere Hubstellung zu bringen, wird der Hubarm 3 mittels der Kolben-Zylinder-Einheit 9 in ein steilere Stellung gebracht, wobei sein unteres Ende innerhalb des Profilträgers 7 bei Betrachtung der Fig. 3 nach links gezogen und sein oberes Ende nach rechts gedrückt wird. Während dieser Bewegung ist der Pneumatikanschluß 36 geschlossen, so daß der Kolben 20 durch die Druckfeder 23 in Richtung seiner Arretierstellung beaufschlagt ist. Infolge der bei dieser Bewegung auftretenden und auf die Abschrägung 24 wirkenden Kraft wird der Arretierbolzen 4 gegen die Kraft der Druckfeder 21 außer Eingriff mit den Löchern der Lochreihe 5 gebracht und somit eine ungehinderte Bewegung des unteren Endes des Hubarms 3 sozusagen automatisch ermöglicht. Dabei rastet der Arretierbolzen 4 unter der Kraft der Druckfeder 23 in jedes Loch ein, so daß auf diese Weise der Hubarm 3 und damit die obere Ladefläche 2 in jeder der Position der Löcher entsprechenden Stellung bei Beendigung des Hubes automatisch verriegelt ist.

Zum Absenken der oberen Ladefläche 2 wird der Pneumatikanschluß 36 geöffnet und auf diese Weise der Arbeitsraum 35 mit Druckluft beaufschlagt, so daß der Kolben 20 und damit der Arretierbolzen 4 unter Vergrößerung des Arbeitsraums 35 entgegen der Kraft der Druckfeder 23 in Richtung zum Zylinderdeckel 19 verschoben wird. Dabei gelangt der Arretierbolzen 4 ebenso wie der Schraubenkopf 29 außer Eingriff mit dem jeweiligen Loch der Lochreihe 5 bzw. mit der Bohrungserweiterung 28 im Zylinderdeckel 19. Wenn der Kolben 20 den oberen Totpunkt seiner Hubbewegung erreicht hat, befindet sich der Arretierbolzen 4 in seiner Lösestellung. Gleichzeitg wird durch den über den Zylinderdeckel 19 überstehenden Schraubenkopf 29 die Lösestellung des Arretierbolzens 4 angezeigt. Auf diese Weise kann der Fahrer jederzeit überprüfen, ob die Verriegelung sich im ordnungsgemäßen Zustand befindet.

Sobald die gewünschte Höhenstellung der oberen Ladefläche 2 erreicht ist, wird der Pneumatikanschluß 36 gesperrt, so daß der Arretierbolzen 4 unter der Kaft der Druckfeder 23 wieder in seine Arretierstellung verfahren wird und auf diese Weise der Hubarm 3 und die obere Ladefläche 2 am Profilträger verriegelt sind.

## Patentansprüche

1. Fahrzeug mit wenigstens einer durch einen Hubarm (3) höhenverstellbaren Ladefläche (2), wobei ein Ende des Hubarms mit der Ladefläche in Verbindung steht und das andere Ende sich mittels einer Laufrolle in einer Führung (7) verschiebbar abstützt, und mit einer Verriegelung zum Verriegeln des verschiebbaren Endes des Hubarms, die eine durch eine Kolben-Zylinder-Einheit von einer Arretier- in eine Lösestellung und zurück bewegbare Raste und eine an der Führung befestigte Aufnahme umfaßt, in die die Raste in der Arretierstellung eingreift, **dadurch gekennzeichnet,** daß die Raste als Arretierbolzen (4) und die Aufnahme als Lochreihe (5) ausgebildet sind, und daß die Lochreihe (5) in der Führung (7) selbst ausgebildet ist, und daß der Arretierbolzen (4) sich im Inneren der Laufrolle (8) befindet.

2. Fahrzeug nach Anspruch 1, **dadurch gekennzeichnet,** daß der Arretierbolzen (4) ständig in Richtung der Arretierstellung mechanisch kraftbeaufschlagt ist.

3. Fahrzeug nach Anspruch 1 oder 2, **dadurch gekennzeichnet,** daß der Arretierbolzen (4) durch die Kraft einer Feder (23) ständig in Richtung der Arretierstellung beaufschlagt ist.

4. Fahrzeug nach wenigstens einem der vorhergehenden Ansprüche, **dadurch gekennzeichnet,** daß der Arretierbolzen (4) zum Lösen der Verriegelung in Richtung der Lösestellung fluidbeaufschlagbar ist.

5. Fahrzeug nach wenigstens einem der vorhergehenden Ansprüche, **dadurch gekennzeichnet,** daß der Arretierbolzen (4) in seiner Längsrichtung verschiebbar ist.

6. Fahrzeug nach wenigstens einem der vorhergehenden Ansprüche, **dadurch gekennzeichnet,** daß das der Lochreihe (5) abgewandte Ende des Arretierbolzens (4) als Kolben (20) der Kolben-Zylinder-Einheit ausgebildet ist.

7. Fahrzeug nach wenigstens einem der vorhergehenden Ansprüche, **dadurch gekennzeichnet,** daß der den Kolben (20) aufnehmende Zylinderraum (17) im Hubarm (3) ausgebildet ist.

8. Fahrzeug nach wenigstens einem der vorhergehenden Ansprüche, **dadurch gekennzeichnet,** daß die Feder (23) als Druckfeder (23) im Zylinderraum (17) angeordnet ist.

9. Fahrzeug nach wenigstens einem der vorhergehenden Ansprüche, **dadurch gekennzeichnet,** daß der Arretierbolzen (4) eine Nabe (15) für die Laufrolle (8) durchsetzt.

10. Fahrzeug nach wenigstens einem der vorhergehenden Ansprüche, **dadurch gekennzeichnet,** daß die Nabe (15) seitlich vom Hubarm (3) abstehend, im wesentlichen normal zur dessen Ebene verlaufend, angeordnet ist.

11. Fahrzeug nach wenigstens einem der vorhergehenden Ansprüche, **dadurch gekennzeichnet,** daß der Arretierbolzen (4) an seinem der Lochreihe (5) angewandten Ende durch einen Stift (27) verlängert ist, der den Zylinderraum (17) und eine Bohrung in den diesen abschließenden Zylinderdeckel (19) durchsetzt.

12. Fahrzeug nach wenigstens einem der vorhergehenden Ansprüche, **dadurch gekennzeichnet,** daß der Stift (27) mit seinem freien Ende bei arretiertem Arretierbolzen (4) innerhalb und bei gelöstem Arretierbolzen (4) außerhalb der Bohrung im Zylinderdeckel (19) angeordnet ist.

13. Fahrzeug nach wenigstens einem der vorhergehenden Ansprüche, **dadurch gekennzeichnet,** daß der Zylinderdeckel (19) auf der fahrzeugäußeren Seite des Hubarms (3) angebracht ist.

14. Fahrzeug nach wenigstens einem der vorhergehenden Ansprüche, **dadurch gekennzeichnet,** daß der Stift (27) als Schraubenbolzen (27) ausgebildet und mit seinem freien Bolzenende mittels Schraubeingriff an dem Arretierbolzen (4) befestigt ist, und daß die Bohrung im Zylinderdeckel (19) eine Bohrungserweiterung (28) zur Aufnahme des Schraubenkopfes (29) des Schraubenbolzens (27) aufweist.

15. Fahrzeug nach wenigstens einem der vorhergehenden Ansprüche, **dadurch gekennzeichnet,** daß der Kolben (20) als ein zum Zylinderdeckel (19) hin offener Kolben (20; 22, 38) ausgebildet ist.

16. Fahrzeug nach wenigstens einem der vorhergehenden Ansprüche, **dadurch gekennzeichnet,** daß eine an der Wandung des Zylinderraums (17) befestigte Membran (32) einen an einen Pneumatikanschluß (36) angeschlossenen Arbeitsraum (35) des Zylinderraums (17) abgrenzt.

17. Fahrzeug nach wenigstens einem der vorhergehenden Ansprüche, **dadurch gekennzeichnet,** daß eine Scheibe (33) zwischen Kolben (20) und Arretierbolzen (4) sowie ein Ringspalt (37) zwischen Kolbenmantel (38) und Wandung des Zylinderraums (17) vorgesehen ist, wobei die Breite des Ringspaltes (37) die Dicke der Membran (32) übersteigt.

18. Fahrzeug nach wenigstens einem der vorhergehenden Ansprüche, **dadurch gekennzeichnet,** daß die Membran (32) mittels der Scheibe (33) am Kolbenboden (22) befestigt ist.

19. Fahrzeug nach wenigstens einem der vorhergehenden Ansprüche, **dadurch gekennzeichnet,** daß der Arretierbolzen (4) eine Längsnut (25) aufweist, in die als Verdrehsicherung eine an der Nabe (15) verankerte federbelastete Kugel (26) eingreift.

20. Fahrzeug nach wenigstens einem der vorhergehenden Ansprüche, **dadurch gekennzeichnet,** daß das der Lochreihe (5) zugewandte Ende des Arretierbolzens (4) eine Abschrägung (24) aufweist, die an dem Bewegungsrichtung des verschiebbaren Endes des Hubarms (3) beim Anheben desselben vorlaufenden Bereich des Arretierbolzens (4) angeordnet ist.

21. Fahrzeug nach wenigstens einem der vorhergehenden Ansprüche, **dadurch gekennzeichnet,** daß die Führung (7) am Fahrzeugrahmen (10) oder an einer Ladefläche (1) angeordnet ist.

22. Fahrzeug nach wenigstens einem der vorhergehenden Ansprüche, **dadurch gekennzeichnet,** daß die Führung (7) an einer unteren Ladefläche (1) und die Gelenkverbindung (6) des Hubarms (3) an einer oberen Ladefläche (2) befestigt sind.

23. Fahrzeug nach wenigstens einem der vorhergehenden Ansprüche, **dadurch gekennzeichnet,** daß die Führung (7) als Träger für die Ladefläche (1) ausgebildet ist.

24. Fahrzeug nach wenigstens einem der vorhergehenden Ansprüche, **dadurch gekennzeichnet,** daß die Führung (7) als ein mit seiner Öffnung (14) dem Hubarm (3) zugewandter C-Träger ausgebildet ist, der in seinem Steg (12) die Lochreihe (5) aufweist.

## Claims

1. Vehicle having at least one loading floor (2) which is height adjustable by means of a lifting arm (3), whereby one end of the lifting arm is connected to the loading floor and the other end is displaceably supported in a guide (7) by means of a runner (8), and having a locking means for locking the displaceable end of the lifting arm which includes a detent means which is movable by a piston-cylinder unit from an arresting position into a release position and back, and an accommodation, which is mounted on the guide and into which the detent means engages in the arresting position, **characterised in that** the detent means is arranged as an arresting bolt (4), and the accommodation is a perforated strip (5), and that the perforated strip (5) is arranged within the guide (7), and that the arresting bolt (4) is located inside the runner (8).

2. Vehicle according to claim 1, **characterised in that** the arresting bolt (4) is permanently mechanically loaded in the direction of the arresting position.

3. Vehicle according to claim 1 or 2, **characterised in that** the arresting bolt (4) is permanently loaded by the force of a spring (23) in the direction of the arresting position.

4. Vehicle according to at least one of the above claims, **characterised in that** the arresting bolt (4) is loaded by a fluid in the direction of the release position for releasing the lock.

5. Vehicle according to at least one of the above claims, **characterised in that** the arresting bolt (4) is displaceable in its longitudinal direction.

6. Vehicle according to at least one of the above claims, **characterised in that** the end of the arresting bolt (4) remote of the perforated strip (5) is arranged as a piston (20) of the piston-cylinder unit.

7. Vehicle according to at least one of the above claims, **characterised in that** the cylinder space (17) accommodating the piston (20) is arranged in the lifting arm (3).

8. Vehicle according to at least one of the above claims, **characterised in that** the spring (23) is arranged as a pressure spring (23) in the cylinder space (17).

9. Vehicle according to at least one of the above claims, **characterised in that** the arresting bolt (4) passes through a hub (15) for the runner (8).

10. Vehicle according to at least one of the above claims, **characterised in that** the hub (15) is arranged to laterally project from the lifting arm (3) and extend substantially normally relative to its plane.

11. Vehicle according to at least one of the above claims, **characterised in that** the arresting bolt (4) is extended at its end remote to the perforated strip (5) by means of a pin (27) which passes through the cylinder space (17) and a bore in the cylinder cover (19) which seals the cylinder space.

12. Vehicle according to at least one of the above claims, **characterised in that** the pin (27) is arranged to be inside the bore in the cylinder cover (19) with its free end when the arresting bolt (4) is arrested, and outside when the arresting bolt (4) is released.

13. Vehicle according to at least one of the above claims, **characterised in that** the cylinder cover (19) is mounted on the lifting arm (3) at the vehicle's outside.

14. Vehicle according to one of the above claims, **characterised in that** the pin (27) is a threaded bolt (27) and mounted with its free bolt end by way of threaded engagement to the arresting bolt (4), and that the bore in the cylinder cover (19) comprises a bore extension (28) for accommodation of the bolt head (29) of the threaded bolt (27).

15. Vehicle according to at least one of the above claims, **characterised in that** the piston (20) is arranged as a piston (20; 22, 38) which is open towards the cylinder cover (19).

16. Vehicle according to at least one of the above claims, **characterised in that** a diaphragm (32) mounted on the wall of the cylinder space (17) defines a workspace (35) of the cylinder space (17) connected to a pneumatic connection (36).

17. Vehicle according to at least one of the above claims, **characterised in that** a plate (33) is provided between piston (20) and arresting bolt (4) and an annular gap (37) between piston casing (38) and wall of the cylinder space (17), in which respect the width of the annular gap (37) exceeds the thickness of the diaphragm (32).

18. Vehicle according to at least one of the above claims, **characterised in that** the diaphragm (32) is mounted on the piston bottom (22) by means of the plate (33).

19. Vehicle according to at least one of the above claims, **characterised in that** the arresting bolt (4) has a longitudinal groove (25) into which engages, as non-rotary safety means, a springloaded ball (26) which is anchored on a hub (15).

20. Vehicle according to at least one of the above claims, **characterised in that** that the end of the arresting bolt (4) facing towards the perforated strip (5) has a slant (24) which is arranged on the section of the arresting bolt (4) running ahead in the movement direction of the displaceable end of the lifting arm (3) when lifting same.

21. Vehicle according to at least one of the above claims, **characterised in that** the guide (7) is arranged on the vehicle frame (10) or on a loading floor (1).

22. Vehicle according to at least one of the above claims, **characterised in that** the guide (7) is mounted on a lower loading floor (1), and the hinged connection (6) of the lifting arm (3) on an upper loading floor (2).

23. Vehicle according to at least one of the above claims, **characterised in that** the guide (7) is arranged as a support of the loading floor (1).

24. Vehicle according to at least one of the above claims, **characterised in that** the guide (7) is arranged as a C-support facing with its opening (14) towards the lifting arm (3) and having the perforated strip (5) in its web (12).


**Revendications**

1. Véhicule avec au moins une plate-forme de chargement (2) réglable en hauteur par un bras de levage (3), l'une des extrémités du bras de levage étant reliée à la plate-forme de chargement et l'autre extrémité prenant appui au moyen d'un galet de roulement (8) dans un guide (7) de façon à pouvoir coulisser, et avec un mécanisme de verrouillage qui, destiné à verrouiller l'extrémité coulissante du bras de levage, comprend un organe de mise en prise pouvant être amené par un vérin d'une position bloquée dans une position dégagée et inversement et un dispositif récepteur fixé au guide et dans lequel l'organe de mise en prise s'engage à l'état bloqué, **caractérisé en ce que** l'organe de mise en prise est réalisé sous la forme d'une cheville d'arrêt (4) et le dispositif récepteur sous la forme d'une rangée de trous (5), en ce que la rangée de trous (5) est réalisée dans le guide (7) même et en ce que la cheville d'arrêt (4) se trouve à l'intérieur du galet de roulement (8).

2. Véhicule selon la revendication 1, **caractérisé en ce que** la cheville d'arrêt (4) est constamment soumise à une force mécanique exercée en direction de la position bloquée.

3. Véhicule selon la revendication 1 ou 2, **caractérisé en ce que** la cheville d'arrêt (4) est constamment soumise à la force d'un ressort (23) s'exerçant en direction de la position bloquée.

4. Véhicule selon au moins l'une quelconque des revendications précédentes, **caractérisé en ce que** pour annuler le verrouillage la cheville d'arrêt (4) est soumise à l'action d'un fluide s'exerçant en direction de la position dégagée.

5. Véhicule selon au moins l'une quelconque des revendications précédentes, **caractérisé en ce que** la cheville d'arrêt (4) peut coulisser dans sa direction longitudinale.

6. Véhicule selon au moins l'une quelconque des revendications précédentes, **caractérisé en ce que** l'extrémité de la cheville d'arrêt (4) qui est éloignée de la rangée de trous (5) est réalisée en tant que piston (20) du vérin.

7. Véhicule selon au moins l'une quelconque des revendications précédentes, **caractérisé en ce que** l'espace cylindrique (17) recevant le piston (20) est réalisé dans le bras de levage (3).

8. Véhicule selon au moins l'une quelconque des revendications précédentes, **caractérisé en ce que** le ressort (23) est disposé en tant que ressort de compression (23) dans l'espace cylindrique (17).

9. Véhicule selon au moins l'une quelconque des revendications précédentes, **caractérisé en ce que** la cheville d'arrêt (4) traverse un moyeu (15) pour le galet de roulement (8).

10. Véhicule selon au moins l'une quelconque des revendications précédentes, **caractérisé en ce que** le moyeu (15) faisant saillie latéralement à partir du bras de levage (3) est disposé de façon à s'étendre sensiblement à angle droit par rapport au plan du bras de levage.

11. Véhicule selon au moins l'une quelconque des revendications précédentes, **caractérisé en ce que** la cheville d'arrêt (4) est prolongée, à son extrémité éloignée de la rangée de trous (5) par une tige (27) qui traverse l'espace cylindrique (17) et un alésage dans le couvercle (19) fermant cet espace.

12. Véhicule selon au moins l'une quelconque des revendications précédentes, **caractérisé en ce que** la tige (27) a son extrémité libre disposée, à l'état bloqué de la cheville d'arrêt (4), à l'intérieur et, à l'état dégagé de la cheville d'arrêt (4), à l'extérieur de l'alésage dans le couvercle (19) de l'espace cylindrique.

13. Véhicule selon au moins l'une quelconque des revendications précédentes, **caractérisé en ce que** le couvercle (19) de l'espace cylindrique est monté sur le côté du bras de levage (3) qui est extérieur au véhicule.

14. Véhicule selon au moins l'une quelconque des revendications précédentes, **caractérisé en ce que** la tige (27) est réalisée sous la forme d'un boulon (27) et est fixée avec son extrémité de boulon libre, au moyen d'un filetage, à la cheville d'arrêt (4) et en ce que l'alésage dans le couvercle (19) de l'espace cylindrique présente une partie d'alésage élargie (28) pour recevoir la tête (29) du boulon (27).

15. Véhicule selon au moins l'une quelconque des revendications précédentes, **caractérisé en ce que** le piston (20) est réalisé sous la forme d'un piston (20, 22, 38) ouvert en direction du couvercle (19) de l'espace cylindrique.

16. Véhicule selon au moins l'une quelconque des revendications précédentes, **caractérisé en ce qu'**une membrane (32) fixée à la paroi de l'espace cylindrique (17) délimite un espace de travail (35) faisant partie de l'espace cylindrique (17) et pouvant communiquer avec un raccord pneumatique (36).

17. Véhicule selon au moins l'une quelconque des revendications précédentes, **caractérisé en ce qu'**il est prévu un disque (33) entre le piston (20) et la cheville d'arrêt (4) ainsi qu'une fente annulaire (37) entre le corps de piston (38) et la paroi de l'espace cylindrique (17), la largeur de la fente annulaire (37) étant supérieure à l'épaisseur de la membrane (32).

18. Véhicule selon au moins l'une quelconque des revendications précédentes, **caractérisé en ce que** la membrane (32) est fixée au moyen du disque (33) au fond (22) du piston.

19. Véhicule selon au moins l'une quelconque des revendications précédentes, **caractérisé en ce que** la cheville d'arrêt (4) présente une rainure longitudinale (25) dans laquelle s'engage, en tant qu'organe interdisant toute rotation, une bille (26) ancrée dans le moyeu (15) et soumise à l'action d'un ressort.

20. Véhicule selon au moins l'une quelconque des revendications précédentes, **caractérisé en ce que** l'extrémité de la cheville d'arrêt (4) située du côté de la rangée de trous (5) présente un chanfrein (24) gui est disposé dans la région de la cheville d'arrêt (4) gui est située à l'avant dans le sens de mouvement de l'extrémité coulissante du bras de levage (3) lors du relèvement de celui-ci.

21. Véhicule selon au moins l'une quelconque des revendications précédentes, **caractérisé en ce que** le guide (7) est monté sur le châssis (10) du véhicule ou sur une plate-forme de chargement (1).

22. Véhicule selon au moins l'une quelconque des revendications précédentes, **caractérisé en ce que** le guide (7) est fixé à une plate-forme de chargement inférieure (1) et l'articulation (6) du bras de levage (3) à une plate-forme de chargement supérieure (2).

23. Véhicule selon au moins l'une quelconque des revendications précédentes, **caractérisé en ce que** le guide (7) est réalisé sous la forme d'une poutre pour la plate-forme de chargement (1).

24. Véhicule selon au moins l'une quelconque des revendications précédentes, **caractérisé en ce que** le guide (7) est réalisé sous la forme d'une poutre à C dont l'ouverture (14) est tournée vers le bras de levage (3) et qui présente dans son âme (12) la rangée de trous (5).

FIG.1

EP 0 343 516 B1

FIG. 2

FIG. 3